# EUROPÄISCHE PATENTANMELDUNG

(11) **EP 2 221 330 A1**
(43) Veröffentlichungstag der Anmeldung: **25.08.2010**
(21) Anmeldenummer: 09002307.8
(22) Anmeldetag: 19.02.2009
(51) Int. Cl.: C08G 18/08, C08G 18/12, C08G 18/28, C09D 175/06

(54) **Funktionalisierte Polyurethanpolyharnstoff-Dispersionen**

(71) Anmelder: Bayer MaterialScience AG, 51368 Leverkusen (DE)
(72) Erfinder: Grablowitz, Hans Dr., 41462 Neuss (DE); Feller, Thomas, 42659 Solingen (DE); Michaelis, Thomas, 51375 Leverkusen (DE)

(57) **Zusammenfassung**

Die vorliegende Erfindung betrifft wässrige Polyurethanharnstoff-Dispersionen mit eingebauten funktionellen Gruppen sowie daraus hergestellte Beschichtungsmittel, ein Verfahren zu deren Herstellung und deren Verwendung zur Herstellung von Beschichtungsmitteln.

## Beschreibung

Die vorliegende Erfindung betrifft wässrige Polyurethanhamstoff-Dispersionen mit eingebauten funktionellen Gruppen sowie daraus hergestellte Beschichtungsmittel, ein Verfahren zu deren Herstellung und deren Verwendung zur Herstellung von Beschichtungsmitteln.

Beschichtungsmittel die auf Polyurethanen basieren, spielen aufgrund ihrer herausragenden Eigenschaften, wie z.B. hohe Kratzfestigkeit und Kälteflexibilität, eine große Rolle. Aufgrund von steigenden ökologischen und anderen gesetzlichen Bestimmungen kommt dabei den lösemittelfreien, wässrigen Polyurethanen eine besondere Bedeutung zu. Beschichtungen, die auf Polyurethan-Dispersionen basieren, kommen in unterschiedlichen Anwendungen, wie z.B. der Textilbeschichtung, Kunststoff-, Automobillackierung oder Glasfaserbeschichtung zum Einsatz.

Funktionalisierte Polymere für Beschichtungen bieten im Allgemeinen die Möglichkeit bei einem weiteren Prozessschritt polymeranaloge Reaktionen durchzuführen, um die Eigenschaften der Beschichtung zu verbessern. Dabei wird häufig versucht, eine hohe Molmasse zu erreichen, da sich eine hohe Molmasse im Allgemeinen positiv auf die Endeigenschaften der Beschichtung, wie z.B. die Lösemittelstabilität und Hydrolysebeständigkeit auswirkt.

In der US-A 7,393,894 werden selbstvernetzende Polyurethan-Dispersionen beschrieben, bei welchen carbonylhaltige Isocyanat-reaktive Verbindungen als Aufbaukomponenten eingesetzt werden, die bei der Trocknung mit nachträglich zugesetzten Vernetzern, wie z.B. Dihydraziden und Diaminen reagieren. Nachteilig ist hierbei, dass eine weitere Komponente zur Vernetzung hinzu gegeben werden muss, um die gewünschten Eigenschaften wie Hydrolysestabilität zu erreichen.

In der US-A 6,462,127 werden fettsäuremodifizierte Polyurethan-Dispersionen beschrieben, die durch den Einfluss von Sauerstoff vernetzen (oxidative Trocknung). Nachteilig an diesen Systemen ist die verhältnismäßig langsame Vernetzung in einem Zeitraum von bis zu sieben Tagen.

Die US-A 6,586,523 beschreibt selbstvernetzende Polyurethan-Dispersionen, die aus Hydroxygruppen-funktionellen Polyurethanen bestehen, deren Isocyanatgruppen zum Teil blockiert sind. Nachteilig bei den dort beschriebenen Polymeren ist, dass unter Anwendung erhöhter Temperaturen das Blockierungsmittel freigesetzt wird, was unter arbeitshygienischen Aspekten unerwünscht ist.

Aufgabe der vorliegenden Erfindung bestand somit in der Bereitstellung von selbstvemetzenden, wässrigen Polyurethanharnstoff-Dispersionen, die sich zu Beschichtungen mit einer sehr guten Hydrolysebeständigkeit verarbeiten lassen.

Überraschend wurde gefunden, dass epoxyfunktionelle Polyurethanpolyharnstoffe ohne Zusatz weiterer Verbindungen thermisch vernetzen (Einkomponenten(1K)-System) oder durch Zugabe von polyfunktionellen Vernetzern wie Polyaminen und/oder Polyisocyanaten vernetzt werden können (Zweikomponenten(2K)-System). Weiterhin zeigen die aus den erfindungsgemäßen Polyurethanpolyharnstoff-Dispersionen hergestellten Beschichtungsmittel eine hervorragende Hydrolysestabilität.

Gegenstand der vorliegenden Erfindung sind somit wässrige Polyurethanpolyharnstoff-Dispersionen**, dadurch gekennzeichnet, dass** diese Struktureinheiten der allgemeinen Formel (I) 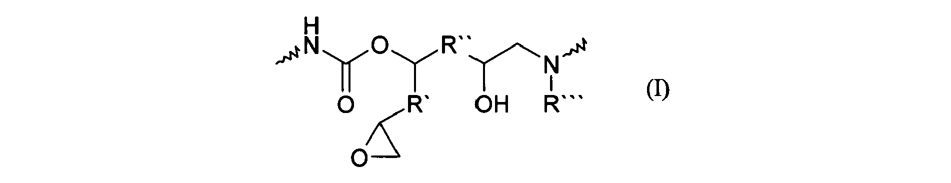 enthalten, in welcher
R' = (CH₂)ₙO und (CH₂)ₙ, wobei n = 1-10 und n = ganze Zahl,
R" = (CH₂)ₙO und (CH₂)ₙ, wobei n = 1-10 und n = ganze Zahl,
R"' = H, CH₂CH₂SO₃, CH₃, CH₂CH₃, Cyclohexyl, CH₂CH₂OH bedeuten.

Die erfmdungsgemäßen Polyurethanharnstoff-Dispersionen enthalten als Aufbaukomponenten
a) ein oder mehrere Polyiscocyanatverbindungen mit einer Funktionalität ≥ 2,
b) ein oder mehrere Polyhydroxyverbindungen einer Molmasse Mₙ von 400 bis 8000 g/mol und einer Funktionalität von 1,5 bis 6,
c) gegebenenfalls ein oder mehrere Polyhydroxyverbindungen einer Molmasse < 400 g/mol und einer Funktionalität von 2 bis 4,
d) ein oder mehrere nicht-ionische, isocyanatreaktive Hydrophilierungsmittel,
e) ein oder mehrere isocyanatreaktive potentiell ionische Hydrophilierungsmittel,
f) ein oder mehrere Polyamine mit einer Molmasse von 32 bis 400 g/mol und einer Funktionalität von 1 bis 3 und
g) ein oder mehrere isocyanatreaktive Polyepoxidverbindungen mit einer Epoxid-Funktionalität ≥ 2.

Dabei enthalten die erfindungsgemäßen Polyurethanhamstoff-Dispersionen
5 bis 40 Gew.-% , bevorzugt 10 bis 35 Gew.-%, besonders bevorzugt 15 bis 25 Gew.-% der Komponente a),
20 bis 88,4 Gew.-%, bevorzugt 31 bis 81 Gew.%, besonders bevorzugt 46 bis 73 Gew.-% der Komponente b),
gegebenenfalls 0 bis 5 Gew.-%, bevorzugt 0,5 bis 4,0 Gew.-%, besonders bevorzugt 1 bis 3 Gew.-% der Komponente c),
1 bis 5 Gew.-%, bevorzugt 1,5 bis 4,5 Gew.-%, besonders bevorzugt 2 bis 4 Gew.-% der Komponente d),
0,1 bis 5 Gew.-%, bevorzugt 0,5 bis 4 Gew.-%, besonders bevorzugt 1 bis 3 Gew.-% der Komponente e),
5 bis 10 Gew.-%, bevorzugt 5,5 bis 9,5 Gew.-%, besonders bevorzugt 6 bis 9 Gew.-% der Komponente f) und
0,5 bis 15 Gew.%, bevorzugt 1 bis 12 Gew.-%, besonders bevorzugt 2 bis 10 Gew.-% der Komponente g).

Geeignete Polyisocyanate a) sind die dem Fachmann an sich bekannten aromatischen, araliphatischen, aliphatischen oder cycloaliphatischen Polyisocyanate. Geeignete Polyisocyanate a) sind z.B. 1,4-Butylendiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis-(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat oder das hydrierte 2,4 und/oder 2,6-Toluylendiisocyanat, 1,5-Naphthylendiisocyanat, 2,4'- oder 4,4'-Diphenylmethan-diisocyanat, 1,3- und 1,4-Bis-(2-isocyanato-prop-2-yl)-benzol (TMXDI), 1,3-Bis(isocyanato-methyl)benzol (XDI), (S)-Alkyl-2,6-diisocyanato-hexanoate oder (L)-Alkyl-2,6-diisocyanatohexanoate.

Anteilig können auch Polyisocyanate mit einer Funktionalität > 2 verwendet werden. Hierzu gehören modifizierte Diisocyanate mit Uretdion-, Isocyanurat-, Urethan-, Allophanat-, Biuret-, Iminooxadiazindion- und/oder Oxadiazintrionstruktur sowie nicht-modifizierte Polyisocyanate mit mehr als 2 NCO-Gruppen pro Molekül z.B. 4-Isocyanatomethyl-1,8-octandiisocyanat (Nonantriisoeyanat) oder Triphenylmethan-4,4',4"-triisocyanat.

Bevorzugt handelt es sich um Polyisocyanate oder Polyisocyanatgemische der vorstehend genannten Art mit ausschließlich aliphatisch und/oder cycloaliphatisch gebundenen Isocyanatgruppen mit einer mittleren Funktionalität von 2 bis 4, bevorzugt 2 bis 2,6 und besonders bevorzugt 2 bis 2,4.

Als Verbindungen b) einsetzbare polymere Polyole weisen ein Molekulargewicht Mₙ von 400 bis 8000 g/mol, bevorzugt von 400 bis 6000 g/mol und besonders bevorzugt von 500 bis 3000 g/mol auf. Ihre Hydroxylzahl beträgt 22 bis 400 mg KOH/g, bevorzugt 30 bis 300 mg KOH/g und besonders bevorzugt 40 bis 250 mg KOH/g und weisen eine OH-Funktionalität von 1,5 bis 6, bevorzugt von 1,8 bis 3 und besonders bevorzugt von 1,9 bis 2,1 auf.

Polyole b) im Sinne der vorliegenden Erfindung sind die in der Polyurethanlacktechnologie bekannten organischen Polyhydroxylverbindungen, wie beispielsweise die üblichen Polyesterpolyole, Polyacrylatpolyole, Polyurethanpolyole, Polycarbonatpolyole, Polyetherpolyole, Polyesterpolyacrylatpolyole sowie Polyurethanpolyacrylatpolyole, Polyurethanpolyesterpolyole, Polyurethanpolyetherpolyole, Polyurethanpolycarbonatpolyole, Polyesterpolycarbonatpolyole, Phenol/Formaldehydharze, allein oder in Mischungen. Bevorzugt sind Polyesterpolyole, Polyetherpolyole oder Polycarbonatpolyole, besonders bevorzugt sind Polyesterpolyole.

Als Polyetherpolyole seien z.B. die Polyadditionsprodukte der Styroloxide, des Ethylenoxid, Propylenoxid, Tetrahydrofuran, Butylenoxid, Epichlorhydrins, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole genannt.

Geeignete hydroxyfunktionelle Polyether weisen OH-Funktionalitäten von 1,5 bis 6,0, bevorzugt 1,8 bis 3,0, OH-Zahlen von 50 bis 700, bevorzugt von 100 bis 600 mg KOH/g Feststoff und Molekulargewichte Mₙ von 400 bis 4 000 g/mol, bevorzugt von 400 bis 3500 auf, wie z.B. Alkoxylierungsprodukte hydroxyfunktioneller Startermolekuele wie Ethylenglykol, Propylenglykol, Butandiol, Hexandiol, Trimethylolpropan, Glycerin, Pentaerythrit, Sorbit oder Gemische dieser und auch anderer hydroxyfunktioneller Verbindungen mit Propylenoxid oder Butylenoxid. Bevorzugt als Polyetherkomponente b) sind Polypropylenoxidpolyole und Polytetramethylenoxidpolyole mit einem Molekulargewicht von 400 bis 4000 g/mol. Hierbei können die besonders niedermolekularen Polyetherpolyole bei entsprechend hohen OH-Gehalten wasserlöslich sein. Besonders bevorzugt sind jedoch wasserunlösliche Polypropylenoxidpolyole und Polytetramethylenoxidpolyole mit einem Molgewicht von 500 bis 3000 g/mol sowie deren Mischungen.

Gut geeignete Beispiele für Polyesterpolyole b) sind die an sind die bekannten Polykondensate aus Di- sowie gegebenenfalls Tri,- und Tetraolen und Di- sowie gegebenenfalls Tri- und Tetra)carbonsäuren oder Hydroxycarbonsäuren oder Lactonen. Anstelle der freien Polycarbonsäuren können auch die entsprechenden Polycarbonsäureanhydride oder entsprechenden Polycarbonsäureester von niederen Alkoholen zur Herstellung der Polyester verwendet werden. Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopenthylglykolester, wobei die drei letztgenannten Verbindungen bevorzugt sind. Um eine Funktionalität > 2 zu erzielen können gegebenenfalls Polyole mit einer Funktionalität von 3 anteilig verwendet werden, beispielsweise Trimethylolpropan, Glycerin, Erythrit, Pentaerythrit, Triemthylolbenzol oder Trishydroxyethylisocyanurat zu nennen.

Als Dicarbonsäuren kommen beispielsweise in Frage Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure, 2,2-Dimethylbernsteinsäure. Anhydride dieser Säuren sind ebenfalls brauchbar, soweit sie existieren. Für die Belange der vorliegenden Erfindung werden die Anhydride infolgedessen durch den Ausdruck "Säure" umfasst. Es können auch Monocarbonsäuren, wie Benzoesäure und Hexancarbonsäure verwendet werden, vorausgesetzt, dass die mittlere Funktionalität des Polyols ≥2 ist. Gesättigte aliphatische oder aromatische Säuren sind bevorzugt, wie Adipinsäure oder Isophthalsäure. Als gegebenenfalls in kleineren Mengen mitzuverwendende Polycarbonsäure sei hier Trimellitsäure genannt. Hydroxycarbonsäuren, die als Reaktionsteilnehmer bei der Herstellung eines Polyesterpolyols mit endständigen Hydroxylgruppen mitverwendet werden können sind beispielsweise Hydroxycapronsäure, Hydroxybuttersäure, Hydroxydecansäure, Hydroxystearinsäure und dergleichen. Geeignete Lactone sind z.B. ε-Caprolacton, Butyrolacton und deren Homologe.

Bevorzugt sind Polyesterpolyole b) auf Basis von Butandiol und/oder Neopentylglykol und/oder Hexandiol und/oder Ethylenglykol und/oder Diethylenglykol mit Adipinsäure und/oder Phthalsäure und/oder Isophthalsäure. Besonders bevorzugt sind Polyesterpolyole b) auf Basis von Butandiol und/oder Neopentylglykol und/oder Hexandiol mit Adipinsäure und/oder Phthalsäure.

Die in Frage kommenden Polycarbonatpolyole sind durch Reaktion von Kohlensäurederivaten, z.B. Diphenylcarbonat, Dimethylcarbonat oder Phosgen mit Diolen erhältlich. Als derartige Diole kommen z.B. Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutlyenglykol, Polybutylenglykole, Bisphenol A, Tetrabrombisphenol A, aber auch Lacton modifizierte Diole in Frage. Bevorzugt enthält die Diolkomponente 40 bis 100 Gew.-% 1,6-Hexandiol und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol ε-Caprolacton oder durch Veretherung von Hexandiol mit sich selbst zum Di- oder Trihexylenglykol erhalten werden. Auch Polyether-Polycarbonatpolyole können eingesetzt werden.

Bevorzugt sind Polycarbonatpolyole b) auf Basis von Dimethylcarbonat und Hexandiol und/oder Butandiol und/oder ε-Caprolacton. Ganz besonders bevorzugt sind Polycarbonatpolyole auf Basis von Dimethylcarbonat und Hexandiol und/oder ε-Caprolacton.

Insgesamt sind jedoch als Komponente b) Polyesterpolyole besonders bevorzugt.

Die gegebenenfalls zum Aufbau der Polyurethanharze einsetzbaren niedermolekularen Polyole c) bewirken in der Regel eine Versteifung und/oder eine Verzweigung der Polymerkette. Das Molekulargewicht liegt bevorzugt zwischen 62 und 200 und ihre Funktionalität ist bevorzugt 2 bis 3. Geeignete Polyole c) können aliphatische, alicyclische oder aromatische Gruppen enthalten. Genannt seien hier beispielsweise die niedermolekularen Polyole mit bis zu etwa 20 Kohlenstoffatomen je Molekül, wie z.B. Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Hydrochinondihydroxyethylether, Bisphenol A (2,2-Bis(4-hydroxyphenyl)propan), hydriertes Bisphenol A (2,2-Bis(4-hydroxycyclohexyl)propan) sowie deren Mischungen, sowie Trimethylolpropan, Glycerin oder Pentaerythrit. Auch Esterdiole wie z.B. δ-Hydroxybutyl-ε-hydroxy-capronsäureester, ω-Hydroxyhexyl-y-hydroxybuttersäureester, Adipinsäure-(β-hydroxyethyl)ester oder Terephthalsäure-bis(β-hydroxyethyl)-ester können verwendet werden. Bevorzugt wird Hexandiol und/oder Trimethylolpropan und/oder Butandiol. Besonders bevorzugt sind Trimethylolpropan und/oder Butandiol.

Geeignete nichtionisch hydrophilierend wirkende Verbindungen d) sind z.B. Polyoxyalkylenether, die mindestens eine Hydroxy- oder Aminogruppe enthalten. Diese Polyether enthalten einen Anteil von 30 Gew.-% bis 100 Gew.-% an Bausteinen, die vom Ethylenoxid abgeleitet sind. In Frage kommen linear aufgebaute Polyether einer Funktionalität zwischen 1 und 2, aber auch Verbindungen der allgemeinen Formel (I), 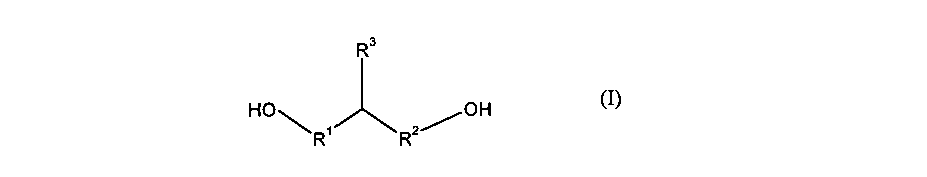 in welcher
- R¹ und R²: unabhängig voneinander jeweils einen zweiwertigen aliphatischen, cycloa- liphatischen oder aromatischen Rest mit 1 bis 18 C-Atomen, die durch Sau- erstoff und/oder Stickstoffatome unterbrochen sein können, bedeuten und
- R³: für einen alkoxyterminierten Polyethylenoxidrest steht.

Nichtionisch hydrophilierend wirkende Verbindungen d) sind beispielsweise auch einwertige, im statistischen Mittel 5 bis 70, bevorzugt 7 bis 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4. Auflage, Band 19, Verlag Chemie, Weinheim S. 31-38).

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Die Molmasse Mₙ dieser Bausteine beträgt 300 g/mol bis 6000 g/mol, bevorzugt 500 g/mol bis 4000 g/mol und besonders bevorzugt 750 g/mol bis 3000 g/mol bei einer Funktionalität von 1.

Geeignete derartige nichtionisch hydrophilierende, monfunktionelle Verbindungen d) sind beispielsweise monofunktionelle Alkoxypolyethylenglycole wie z.B. Methoxypolyethylenglykole (MPEG Carbowax^{®} 2000 oder Methoxy PEG-40, Molgewichtsbereich 1800 bis 2200, The Dow Chemical Company), monofunktionelle Polyethermonoalkylether wie z.B. LB 25 aufgebaut aus Butanol und Ethylenoxid sowie Propylenoxid, mit einer mittleren Molmasse Mₙ von 2250 g/mol von Bayer Material Science, monofunktionelle Polyetheramine (Jeffamine^{®} M 1000, PO/EO mol-Verhältnis 3/19 und M 2070, PO/EO mol-Verhältnis 10/31, Huntsman Corp.).

Bevorzugt werden als Verbindung d) MPEG Carbowax^{®} 2000, LB 25 oder Jeffamine^{®} M 2070 eingesetzt. Besonders bevorzugt sind MPEG Carbowax^{®} 2000 oder LB 25.

Die Komponente e) enthält potentiell ionische Gruppen, die entweder kationischer oder anionischer Natur sein können. Kationisch, anionisch oder nichtionisch dispergierend wirkende Verbindungen sind solche, die beispielsweise Sulfonium-, Ammonium-, Phosphonium-, Carboxylat-, Sulfonat-, Phosphonat-Gruppen oder die Gruppen, die durch Salzbildung in die vorgenannten Gruppen überführt werden können (potentiell ionische Gruppen) oder Polyethergruppen enthalten und durch vorhandene isocyanatreaktive Gruppen in die Makromoleküle eingebaut werden können. Bevorzugt geeignete isocyanatreaktive Gruppen sind Hydroxyl- und Amingruppen.

Geeignete ionische oder potentiell ionische Verbindungen e) sind z.B. Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Aminoethyl)-β-alanin, 2-(2-Amino-ethylamino)-ethansulfonsäure, Ethylendiamin-propyl- oder butylsulfonsäure, 1,2- oder 1,3-Propylendiamin-βethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III) sowie in kationische Gruppen überführbare Bausteine wie N-Methyl-diethanolamin als hydrophile Aufbaukomponenten. Bevorzugte ionische oder potentielle ionische Verbindungen sind solche, die über Carboxy- oder Carboxylat- und/oder Sulfonatgruppen und/oder Ammoniumgruppen verfügen und eine Funktionalität von 1,9 bis 2,1 aufweisen. Besonders bevorzugte ionische Verbindungen weisen eine Aminfunktionalität von 1,9 bis 2,1 auf und enthalten Sulfonatgruppen als ionische oder potentiell ionische Gruppen, wie die Salze von N-(2-Aminoethyl)-β-alanin, der 2-(2-Amino-ethylamino-)ethansulfonsäure oder des Additionsproduktes von IPDI und Acrylsäure (EP-A 0 916 647, Beispiel 1).

Die zur Kettenverlängerung eingesetzten Polyamine f) weisen bevorzugt eine Funktionalität zwischen 1 bis 2 auf und sind z.B. Di- oder Polyamine sowie Hydrazide, z.B. Ethylendiamin, 1,2- und 1,3-Diaminopropan, 1,4-Diaminobutan, 1,6-Diaminohexan, Isophorondiamin, Isomerengemisch von 2,2,4- und 2,4,4-Trimethylhexamethylendiamin, 2-Methylpentamethylendiamin, Diethylentriamin, 1,3- und 1,4-Xylylendiamin, α,α,α',α'-Tetramethyl-1,3-und -1,4-xylylendiamin und 4,4-Diaminodicyclohexylmethan, Dimethylethylendiamin, Hydrazin oder Adipinsäuredihydrazid.

Als Komponente f) kommen prinzipiell auch Verbindungen in Betracht, die aktiven Wasserstoff mit gegenüber NCO-Gruppen unterschiedlicher Reaktivität enthalten, wie Verbindungen, die neben einer primären Aminogruppe auch sekundäre Aminogruppen oder neben einer Aminogruppe (primär oder sekundär) auch OH-Gruppen aufweisen. Beispiele hierfür sind primäre/sekundäre Amine, wie 3-Amino-1-Methylaminopropan, 3-Amino-1-Ethylaminopropan, 3-Amino-1-cyclohexylaminopropan, 3-Amino-1-methylaminobutan, weiterhin Alkanolamine wie N-Aminoethylethanolamin, Ethanolamin, 3-Aminopropanol oder Neopentanolamin.

Bevorzugt sind Diethanolamin und/oder Hydrazin und/oder Isophorondiamin (IPDA) und/oder Ethylendiamin. Besonders bevorzugt sind Hydrazin und/oder Isophorondiamin und/oder Ethylendiamin. Ganz besonders bevorzugt ist eine Mischung aus Hydrazin und IPDA.

Geeignete Verbindungen g) sind isocyanatreaktive Polyepoxidverbindungen mit einer Epoxyfunktionalität zwischen 2 und 4 und einer isocyanatreaktiven Funktionalität zwischen 1 und 2, bevorzugt mit einer Epoxid-Funktionalität zwischen 2 und 4 und einer isocyanatreaktiven Funktionalität von 1, besonders bevorzugt mit einer Epoxid-Funktionalität von 2 und einer isocyanatreaktiven Funktionalität von 1. Dazu zählen insbesondere hydroxyfunktionelle Polyepoxidverbindungen, wie z.B. Glycerindiglycidylether, 1,4-bis(oxiran-2-yloxy)butan-2-ol, 1,5-bis(oxiran-2-ylmethoxy)pentan-2-ol, 1-(oxiran-2-ylmethoxy)-6-(oxiran-2-yloxy)hexan-2-ol, 1-(oxiran-2-ylmethoxy)-6-(oxiran-2-yloxy)heptan-2-ol, 1-(oxiran-2-ylmethoxy)-6-(oxiran-2-yloxy)octan-2-ol, 1-(oxiran-2-ylmethoxy)-6-(oxiran-2-yloxy)nonan-2-ol, 1-(oxiran-2-ylmethoxy)-6-(oxiran-2-yloxy)decan-2-ol 1,3-di(oxiran-2-yl)propan-2-ol, 1,2:7,8-dianhydro-3,4,6-trideoxyoctitol, 1,5-di(oxiran-2-yl)pentan-3-ol, bevorzugt ist Glycerindiglycidylether.

Die Menge der einzusetzenden Komponente g) in der erfindungsgemäßen Polyurethanpolyharnstoff-Dispersion variiert je nach Anwendung. Für die Verwendung in einem 1K-System werden bevorzugt 0,1 bis 7,0 Gew.-%, besonders bevorzugt 0,5 bis 5 Gew.-% eingesetzt. In der Verwendung als 2K-System kommen bevorzugt 0,5 bis 15 Gew.-%, besonders bevorzugt 3 bis 12 Gew.-% der Komponente g) zum Einsatz.

Zur Herstellung der erfindungsgemäßen PU-Dispersionen können alle aus dem Stand der Technik bekannten Verfahren wie z.B. Prepolymer-Mischverfahren, Acetonverfahren oder Schmelzdipergierverfahren verwendet werden. Bevorzugt wird die PUR-Dispersion nach dem Aceton-Verfahren hergestellt.

Ebenfalls Gegenstand der vorliegenden Erfindung ist ein Verfahren zur Herstellung der erfindungsgemäßen wässrigen Polyurethanpolyharnstoff-Dispersionen, dadurch gekennzeichnet, dass zunächst durch Umsetzung der Komponenten a), b), c), d), e) und g) ein Isocyanat- und Epoxygruppen-haltiges Polyurethan-Präpolymer hergestellt wird und dieses in einem weiteren Schritt mit NH₂- und NH-funktionellen Komponenten e) und f) kettenverlängert und in die wässrige Phase überführt wird.

Für die Herstellung der PUR-Dispersion nach dem Aceton-Verfahren werden üblicherweise die Bestandteile b), c), d), e) und g), die keine primären oder sekundären Aminogruppen aufweisen dürfen und die Polyisocyanatkomponente a) zur Herstellung eines isocyanatfunktionellen Polyurethan-Prepolymers ganz oder teilweise vorgelegt und gegebenenfalls mit einem mit Wasser mischbaren aber gegenüber Isocyanatgruppen inerten Lösungsmittel verdünnt und auf Temperaturen im Bereich von 50 bis 120°C aufgeheizt. Zur Beschleunigung der Isocyanatadditionsreaktion können die in der Polyurethan-Chemie bekannten Katalysatoren eingesetzt werden. Bevorzugt ist Dibutylzinndilaurat.

Geeignete Lösungsmittel sind die üblichen aliphatischen, ketofunktionellen Lösemittel wie z.B. Aceton, Butanon, die nicht nur zu Beginn der Herstellung, sondern gegebenenfalls in Teilen auch später zugegeben werden können. Bevorzugt sind Aceton oder Butanon.

Anschließend werden die gegebenenfalls zu Beginn der Reaktion noch nicht zugegebenen Bestandteile von a) - g) zudosiert.

Bei der Herstellung des Polyurethan-Prepolymeren beträgt das Stoffmengenverhältnis von Isocyanatgruppen zu mit Isocyanat reaktiven Gruppen 1,0 bis 3,5, bevorzugt 1,1 bis 3,0, besonders bevorzugt 1,1 bis 2,5.

Die Umsetzung der Komponenten a), b), c), d), e) und g) zum Prepolymer erfolgt teilweise oder vollständig, bevorzugt aber vollständig. Es werden so Polyurethan-Prepolymere, die freie Isocyanat- und Epoxidgruppen enthalten, in Substanz oder in Lösung erhalten.

Im Anschluss wird in einem weiteren Verfahrensschritt, falls noch nicht oder nur teilweise geschehen das erhaltene Prepolymer mit Hilfe von aliphatischen Ketonen wie Aceton oder Butanon gelöst.

Anschließend werden mögliche NH₂- und NH-funktionelle Komponenten e) und f) mit den noch verbliebenen Isocyanat- und Epoxidgruppen umgesetzt. Diese Kettenverlängerung/- terminierung kann dabei entweder in Lösungsmittel vor dem Dispergieren, während des Dispergierens oder in Wasser nach dem Dispergieren durchgeführt werden. Bevorzugt wird die Kettenverlängerung vor der Dispergierung in Wasser durchgeführt.

Werden zur Kettenverlängerung Verbindungen entsprechend der Definition von e) und f) mit NH₂- oder NH-Gruppen eingesetzt, erfolgt die Kettenverlängerung der Prepolymere bevorzugt vor der Dispergierung.

Der Kettenverlängerungsgrad, also das Äquivalentverhältnis von NCO-reaktiven Gruppen der zur Kettenverlängerung eingesetzten Verbindungen zu freien NCO-Gruppen des Prepolymers liegt zwischen 40 bis 100 %, bevorzugt zwischen 60 bis 100 %, besonders bevorzugt zwischen 70 und 100 %.

Die aminischen Komponenten e) und f) können gegebenenfalls in wasser- oder lösemittelverdünnter Form im erfindungsgemäßen Verfahren einzeln oder in Mischungen eingesetzt werden, wobei grundsätzlich jede Reihenfolge der Zugabe möglich ist.

Wenn Wasser oder organische Lösemittel als Verdünnungsmittel mitverwendet werden so beträgt der Verdünnungsmittelgehalt bevorzugt 70 bis 95 Gew.-%.

Die Herstellung der erfmdungsgemäßen Polyurethanharnstoff-Dispersion aus den Prepolymeren erfolgt im Anschluss an die Kettenverlängerung. Dazu wird das gelöste und kettenverlängerte Polyurethanpolymer gegebenenfalls unter starker Scherung, wie z.B. starkem Rühren, entweder in das Dispergierwasser eingetragen oder es wird umgekehrt das Dispergierwasser zu den Prepolymerlösungen gerührt. Bevorzugt wird das Wasser in das gelöste Prepolymer gegeben.

Das in den Dispersionen nach dem Dispergierschritt noch enthaltene Lösemittel wird üblicherweise anschließend destillativ entfernt. Eine Entfernung bereits während der Dispergierung ist ebenfalls möglich.

Der Feststoffgehalt der erfindungsgemäßen Polyurethanpolyhanrstoff-Dispersion liegt zwischen 20 bis 70 Gew.-%, bevorzugt 30 bis 65 Gew.-% und besonders bevorzugt zwischen 35 bis 62 Gew.-%.

Weiterer Gegenstand der Erfindung ist die Verwendung der erfindungsgemäßen Polyurethanpolyharnstoff-Dispersionen zur Herstellung von Beschichtungsmitteln für Holz, Kunststoff, Metall, Glas, Textilien, Leder, Papier sowie Fasern wie z.B. Glasfasern, Kunststofffasern und Graphitfasern, bevorzugt zur Herstellung von Textilbeschichtungen.

Die erfmdungsgemäßen Dispersionen können thermisch zur Selbstvernetzung gebracht werden (IK-System) oder mit epoxidreaktiven und/oder isocyanatreaktiven polyfunktionellen Verbindungen vernetzen (2K-System).

Gegenstand der Erfindung ist die Verwendung der erfindungsgemäßen wässrigen Polyurethanpolyharnstoff-Dispersionen zur Herstellung von thermisch selbstvernetzenden 1K-Systemen.

Ebenfalls Gegenstand der Erfindung ist die Verwendung der erfmdungsgemäßen wässrigen Polyurethanpolyharnstoff-Dispersionen zur Herstellung von 2K-Systemen.

Die 2K-Systeme, enthaltend die erfindungsgemäßen Polyurethanpolyharnstoff-Dispersionen, enthalten wasserlösliche oder wasserdispergierbare Vernetzer, wie hydrophile Polyisocyanate, Polyamine, Polyepoxide oder Melamine.

Die wässrigen Beschichtungsmittel, enthalten die erfindungsgemäßen Polyurethanpolyharnstoff-Dispersionen, können als weitere Komponente Hilfs- und Zusatzstoffe enthalten. Dies können Cobinder, Verdicker, Haftvermitteler, Gleitmittel, Benetzungsadditive, Farbstoffe, Licht- und Alterungsschutzmittel, Pigmente, Verlaufshilfmittel, Antistatika, UV-Absorber, Filmbildungshilfsmittel, Entschäumer oder Weichmacher sowie Licht- und Alterungsschutzmittel sein.

Die erfindungsgemäßen Polyurethanpolyharnstoff-Dispersionen können als Bestandteil in wasserbasierten Lacken zu Beschichtung von Oberflächen eingesetzt werden. Zu diesem Zweck werden die erfindungsgemäßen Polyurethanpolyharnstoff-Dispersionen mit weiteren Komponenten wie z.B. wässrige Dispersionen auf Polyesterbasis, auf Polyurethanbasis, auf Polyurethan-Polyacrylatbasis, auf Polyacrylatbasis, auf Polyetherbasis, auf Polyester-Polyacrylatbasis, auf Alkydharzbasis, auf Polymerisatbasis, auf Polyamid/imidbasis oder auf Polyepoxidbasis abgemischt.

Die Herstellung der Beschichtung kann nach den unterschiedlichen Spritzverfahren wie beispielsweise Luftdruck-, Airless- oder Elektrostatik-Spritzverfahren unter Verwendung von Ein- oder gegebenenfalls Zweikomponenten-Spritzanlagen erfolgen. Die Lacke und Beschichtungsmittel, enthaltend die erfindungsgemäßen Polyurethanpolyharnstoff-Dispersionen, können jedoch auch nach anderen Methoden, beispielsweise durch Streichen, Rollen, Sprühen, Tauchen, Spritzen, Drucken oder Rakeln appliziert werden.

### Beispiele:

### Rohstoffe und Methoden:

| | |
|---|---|
| Desmophen^{®} PE 170 HN: | Polyester aus Adipinsäure, Hexandiol und Neopentylglycol, OHZ 66, Mₙ = 1700 g·mol⁻¹ (Bayer MaterialScience AG, Leverkusen). |
| | |
| Polyether LB 25: | Monofunktioneller Polyether auf Ethylenoxid/Propylenoxid-Basis mit einem Ethylenoxidanteil von 84%, OHZ 25, Mₙ = 2250 g·mol⁻¹ (Bayer MaterialScience AG, DE). |
| | |
| Desmodur^{®} I: | IPDI, Isophorondiisocyanat (Bayer MaterialScience AG, DE). |
| | |
| Desmodur^{®} H: | HDI, 1,6-Hexamethylendiisocyanat (Bayer MaterialScience AG, DE). |
| | |
| IPDA: | Isophorondiamin (Bayer MaterialScience AG, DE). |
| | |
| AAS: | Diaminosulfonat, 45%ig in Wasser, H₂N-CH₂-CH₂-NH-CH₂-CH₂-SO₃Na (Bayer MaterialScience AG, DE). |
| | |
| GDGE: | Glycerindiglycidylether, CAS [27043-36-3] (Sigma-Aldrich, DE) |
| | |
| Bayhydur^{®} 3100: | Hydrophiles aliphatisches Polyisocyanat auf Basis von 1,6-Hexamethylendiisocyanat mit einem NCO-Gehalt von 17,4% (Bayer MaterialScience AG, DE). |
| | |
| Imprafix^{®} HS-C: | Alkylamin (Bayer MaterialScience AG, DE). |

Die mechanischen Eigenschaften der PU-Dispersionen werden an freien Filmen bestimmt, die wie folgt hergestellt werden:

In einem Filmziehgerät, bestehend aus zwei polierten Walzen, die auf einen exakten Abstand eingestellt werden können, wird vor die hintere Walze ein Trennpapier eingelegt. Mit einer Fühlerblattlehre wird der Abstand zwischen Papier und vorderer Walze eingestellt.

Dieser Abstand entspricht der Filmdicke (nass) der resultierenden Beschichtung und kann auf die gewünschte Auflage jedes Striches eingestellt werden. Die Beschichtung ist auch konsekutiv in mehreren Strichen möglich.

Zum Aufbringen der einzelnen Striche werden die Produkte nach Einstellung der Viskosität durch Zugabe von anionischem Acrylpolymer auf 4500 mPa·s auf den Spalt zwischen Papier und vorderer Walze gegossen; das Trennpapier wird senkrecht nach unten weggezogen, wobei auf dem Papier der entsprechende Film entsteht. Sollen mehrere Striche aufgebracht werden, wird jeder einzelne Strich getrocknet und das Papier erneut eingelegt.

### Trocknungsbedingungen:

A: 3 Tage bei Raumtemperatur (23°C)
B: 50°C bis Trocken anschließend 3 Minuten bei 150°C
C: 50°C bis Trocken anschließend 3 Minuten bei 150°C und 10 Minuten 165°C

Sofern nicht abweichend gekennzeichnet, beziehen sich alle Prozentangaben auf das Gewicht.

Die Bestimmung der Festkörpergehalte erfolgte nach DIN-EN ISO 3251.

NCO-Gehalte wurden, wenn nicht ausdrücklich anders erwähnt, volumetrisch gemäß DIN-EN ISO 11909 bestimmt.

Zur Bestimmung des Quellungsgrades wurden die freien Filme in Ethylacetat bei Raumtemperatur über 24 h gequollen und die Volumenänderung des Filmstücks nach Quellung mittels eines Lineals ermittelt.

Ein 0,1-0,2 mm dicker Film wird in einer Größe von 50X20 mm ausgestanzt und 2 Stunden in Ethylacetat bei Raumtemperatur gelagert. Die Berechnung der Volumenquellung erfolgt unter der Annahme, dass die Änderung in allen der Dimensionen proportional ist.

Die Filmlagerung unter Hydrolysebedingungen erfolgt gemäß DIN EN 12280-3. Die Bestimmung der Mechanik dieser Filmeproben wird nach 24 h Lagerung unter Normklimabedingungen (20 °C und 65% Luftfeuchtigkeit) gemäß DIN 53504 durchgeführt. Die Bestimmung der mechanischen Filmeigenschaften erfolgt nach 30 min. Trocknung bei 150 °C. Dabei bedeuten ε_{b} = Bruchdehnung in %, σₘₐₓ = Zugfestigkeit in MPa.

### Herstellung der erfindungsgemäßen PU-Dispersionen:

### Beispiel 1 (erfindungsgemäß)

282,4 g des Polyesterpolyols PE 170 HN, 11,3 g des monofunktionellen Hydrophilierungsmittels LB25 und 12,9 g GDGE werden mit 37 g HDI und 49,8 g IPDI bei 50 °C versetzt und anschließend bei 100 °C zum Präpolymer umgesetzt bis der theoretische NCO-Wert (NCO-1 = 5,28%) erreicht ist. Daraufhin werden bei 80 °C 700 g Aceton zugeführt und auf 40 °C abgekühlt und das Präpolymer gelöst. Es erfolgt die Zugabe von 29,6 g des Kettenverlängerers IPDA in 50 g Aceton und es wird 5 min. gerührt. Direkt anschließend erfolgt die Zugabe von 10,5 g AAS und 1 g Hydrazinhydrat in 42 g Wasser und es wird ebenfalls 5 min. nachgerührt. Das Produkt wird in 600 g Wasser dispergiert und anschließend wird das Aceton bei 120 mbar bei 40 °C abdestilliert. Es entsteht eine wässrige Dispersion eines Feststoffgehalts von 40,0% mit einem pH-Wert von 6,7 und einer mittleren Teilchengröße von 340 nm.

### Beispiel 2 (erfindungsgemäß)

Es wird die Vorschrift aus Beispiel 1 verwendet, es werden aber 241 g des Polyesters PE 170 HN mit 34,3 GDGE eingesetzt. Es entsteht eine wässrige Dispersion eines Feststoffgehalts von 40,2% mit einem pH-Wert von 6,6 und einer mittleren Teilchengröße von 260 nm.

### Beispiel 3 (erfindungsgemäß)

Es wird die Vorschrift aus Beispiel 1 verwendet, es werden aber 217 g des Polyesters PE 170 HN mit 47,8 GDGE eingesetzt. Es entsteht eine wässrige Dispersion eines Feststoffgehalts von 39,2% mit einem pH-Wert von 6,6 und einer mittleren Teilchengröße von 340 nm.

### Vergleichsbeispiele:

### Beispiel 4 (Gegenbeispiel, ohne isocyanatreaktives Polyepoxid)

303,9 g des Polyesterpolyols PE 170 HN und 10,3 g des monofunktionellen Hydrophilierungsmittels LB25 werden mit 34 g HDI und 45 g IPDI bei 50 °C versetzt und anschließend bei 100 °C zum Präpolymer umgesetzt bis der theoretische NCO-Wert (NCO = 4,79%) erreicht ist. Daraufhin werden bei 80 °C 700 g Aceton zugeführt und auf 40 °C abgekühlt und das Präpolymer gelöst. Es erfolgt die Zugabe von 26,8 g des Kettenverlängerers IPDA in 50 g Aceton und es wird 5 min. gerührt. Direkt anschließend erfolgt die Zugabe von 9,5 g AAS und 0,9 g Hydrazinhydrat in 38 g Wasser und es wird ebenfalls 5 min. nachgerührt. Das Produkt wird in 590 g Wasser dispergiert und anschließend wird das Aceton bei 120 mbar bei 40 °C abdestilliert. Es entsteht eine wässrige Dispersion eines Feststoffgehalts von 40,0% mit einem pH-Wert von 6,5 und einer mittleren Teilchengröße von 350 nm.

### Beispiel 5 (Gegenbeispiel, mit Ethylhexanol anstelle isocyanatreaktives Polyepoxid)

282,4 g des Polyesterpolyols PE 170 HN, 11,3 g des monofunktionellen Hydrophilierungsmittels LB25 und 8,2 g Ethylhexanol werden mit 37 g HDI und 49,8 g IPDI bei 50 °C versetzt und anschließend bei 100 °C zum Präpolymer umgesetzt bis der theoretische NCO-Wert (NCO = 5,35%) erreicht ist. Daraufhin werden bei 80 °C 690 g Aceton zugeführt und auf 40 °C abgekühlt und das Präpolymer gelöst. Es erfolgt die Zugabe von 29,6 g des Kettenverlängerers IPDA in 50 g Aceton und es wird 5 min. gerührt. Direkt anschließend erfolgt die Zugabe von 10,5 g AAS und 1 g Hydrazinhydrat in 42 g Wasser und es wird ebenfalls 5 min. nachgerührt. Das Produkt wird in 600 g Wasser dispergiert und anschließend wird das Aceton bei 120 mbar bei 40 °C abdestilliert. Es entsteht eine wässrige Dispersion eines Feststoffgehalts von 39,8% mit einem pH-Wert von 6,7 und einer mittleren Teilchengröße von 600 nm.

Von den Beispielen wurden die freien Filme wie beschrieben hergestellt. Zusätzlich wurden je 3 Gew% der Vernetzer Bayhydur^{®} 3100 oder Imprafix^{®} HS-C unter Rühren in die Dispersionen gemischt und wiederum die freien Filme erzeugt. Die Filme wurden anschließend mechanisch charakterisiert und die Quellung in Ethylacetat bestimmt.

**Tabelle 1: Quellungsgrade in Ethylacetat**

| System | **1K** | | | **2K** | |
|---|---|---|---|---|---|
| Trocknung | A | B | C | Amin / B | Isocyanat / B |
| Gegenbeispiel 1 | 470 | 450 | 460 | 380 | 310 |
| Gegenbeispiel 2 | zerlaufen | zerlaufen | zerlaufen | zerlaufen | 280 |
| Beispiel 1 | 380 | 350 | 280 | 340 | 300 |
| Beispiel 2 | 270 | 250 | 240 | 180 | 250 |
| Beispiel3 | 220 | 200 | 200 | 100 | 210 |

Anhand der ermittelten Quellungsgrade aus den 1K-Systemen erkennt man, dass die erfindungsgemäßen Polyurethane niedrigere Quellungsgrade und somit eine höhere Venetzung im Vergleich zu den Gegenbeispielen aufweisen. Die Dispersionen weisen somit schon nach der Herstellung eine höhere Molmasse auf und können thermisch noch nachvernetzt werden, wobei die Quellungsgrade mit steigender Menge der Polyepoxidverbindung abnehmen.

Anhand der ermittelten Quellungsgrade aus den 2K-Systemen erkennt man, dass die erfmdungsgemäßen Polyurethane sowohl stärker Isocyanat- und Aminreaktiv sind, woraus sich der Schluss ableitet, dass sowohl Epoxy- als auch Hydroxy- und Amingruppen vorliegen müssen.

**Tabelle 2: Mechanische Kenndaten der freien Filme der Beispielsdispersion vor und nach Hydrolyse nach Standardtrocknung B**

| Hydrolysedauer | 0-Werte | | | 2 Wochen | | 4 Wochen | | 8 Wochen | |
|---|---|---|---|---|---|---|---|---|---|
| **Beispiel** | **100%-Modul / [MPa]** | **σₘₐₓ / [MPa]** | **εₘₐₓ / %** | **σₘₐₓ / [MPa]** | **εₘₐₓ / %** | **σₘₐₓ / [MPa]** | **εₘₐₛ / %** | **σₘₐₓ / [MPa]** | **εₘₐₓ / %** |
| Beispiel 4* | 2,7 | 41,0 | 1100 | 26,0 | 1100 | zerlaufen | | zerlaufen | |
| Beispiel 5* | 2,3 | 7,0 | 250 | 2,5 | 250 | zerlaufen | | zerlaufen | |
| Beispiel 1 | 3,2 | 29,0 | 850 | 42,0 | 850 | 34,0 | 900 | 25,2 | 1000 |
| Beispiel 2 | 4,3 | 19,0 | 700 | 29,0 | 700 | 30,0 | 600 | 28,9 | 650 |
| Beispiel 3 | 3,1 | 44,0 | 600 | 29,0 | 600 | 30,0 | 600 | 31,5 | 600 |

Es wird deutlich, dass die erfindungsgemäßen Dispersionen eine signifikant höhere Hydrolysestabilität aufweisen, wobei die Hydrolysestabilität mit steigendem Anteil der Polyepoxidverbindung zunimmt.

## Patentansprüche

1. Wässrige Polyurethanpolyharnstoff-Dispersionen, **dadurch gekennzeichnet, dass** diese Struktureinheiten der allgemeinen Formel (I) 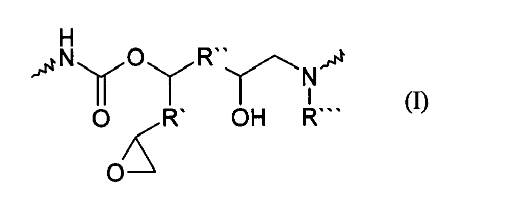 enthalten, in welcher
R' = (CH₂)ₙO und (CH₂)ₙ, wobei n = 1 - 10 und n = ganze Zahl,
R" = (CH₂)ₙO und (CH₂)ₙ, wobei n = 1 - 10 und n = ganze Zahl,
R'" = H, CH₂CH₂SO₃-_{'} CH₃, CH₂CH₃, Cyclohexyl, CH₂CH₂OH bedeuten.

2. Wässrige Polyurethanpolyharnstoff-Dispersionen gemäß Anspruch 1, **dadurch gekennzeichnet, dass** diese als Aufbaukomponenten
a) ein oder mehrere Polyiscocyanatverbindungen mit einer Funktionalität ≥ 2,
b) ein oder mehrere Polyhydroxyverbindungen einer Molmasse Mₙ von 400 bis 8000 g/mol und einer Funktionalität von 1,5 bis 6,
c) gegebenenfalls ein oder mehrere Polyhydroxyverbindungen einer Molmasse < 400 g/mol und einer Funktionalität von 2 bis 4,
d) ein oder mehrere nicht-ionische, isocyanatreaktive Hydrophilierungsmittel,
e) ein oder mehrere isocyanatreaktive potentiell ionische Hydrophilierungsmittel,
f) ein oder mehrere Polyamine mit einer Molmasse von 32 bis 400 g/mol und einer Funktionalität von 1 bis 3 und
g) ein oder mehrere isocyanatreaktive Polyepoxidverbindungen mit einer Epoxid-Funktionalität ≥ 2 enthalten.

3. Wässrige Polyurethanpolyharnstoff-Dispersionen gemäß Anspruch 2, **dadurch gekennzeichnet, dass** Komponente b) Polyesterpolyole auf Basis von Butandiol und/oder Neopentylglykol und/oder Hexandiol und/oder Ethylenglykol und/oder Diethylenglykol mit Adipinsäure und/oder Phthalsäure und/oder Isophthalsäure sind.

4. Wässrige Polyurethanpolyharnstoff-Dispersionen gemäß Anspruch 2, **dadurch gekennzeichnet, dass** die Komponente g) eine Epoxid-Funktionalität zwischen 2 und 4 und einer isocyanatreaktiven Funktionalität von 1 aufweist.

5. Wässrige Polyurethanpolyharnstoff-Dispersionen gemäß Anspruch 2, **dadurch gekennzeichnet, dass** die Komponente g) eine Epoxid-Funktionalität von 2 und einer isocyanatreaktiven Funktionalität von 1 aufweist.

6. Wässrige Polyurethanpolyharnstoff-Dispersionen gemäß Anspruch 2, **dadurch gekennzeichnet, dass**

7. Verfahren zur Herstellung der wässrigen Polyurethanpolyharnstoff-Dispersionen gemäß Anspruch 1, **dadurch gekennzeichnet, dass** zunächst durch Umsetzung der Komponenten a), b), c), d), e) und g) ein Isocyanat- und Epoxygruppen-haltiges Polyurethan-Präpolymer hergestellt wird und dieses in einem weiteren Schritt mit NH₂- und/oder NH-funktionellen Komponenten e) und f) kettenverlängert und in die wässrige Phase überführt wird.

8. Verwendung der Polyurethanpolyharnstoff-Dispersionen gemäß Anspruch 1 zur Herstellung von Beschichtungsmitteln für Holz, Kunststoff, Metall, Glas, Textilien, Leder, Papier sowie Fasern

9. Verwendung der wässrigen Polyurethanpolyharnstoff-Dispersionen gemäß Anspruch 1 zur Herstellung von thermisch selbstvernetzenden 1K-Systemen.

10. Verwendung der wässrigen Polyurethanpolyharnstoff-Dispersionen gemäß Anspruch 1 zur Herstellung von 2K-Systemen.

11. 1K-System enthaltend wässrige Polyurethanpolyharnstoff-Dispersionen gemäß Anspruch 1.

12. 2K-System enthaltend wässrige Polyurethanpolyharnstoff-Dispersionen gemäß Anspruch 1 sowie wasserlösliche oder wasserdispergierbare Vernetzer, wie hydrophile Polyisocyanate, Polyamine, Polyepoxide oder Melamine.
